# EUROPEAN PATENT SPECIFICATION

(11) **EP 4 594 228 B1**
(45) Date of publication and mention of the grant of the patent: **22.07.2026**
(21) Application number: 24734394.0
(22) Date of filing: 17.05.2024
(51) Int. Cl.: B65H 19/18

(54) **WEB TAKE-UP AND TRANSFER SYSTEM FOR A WEB PROCESSING SYSTEM**
BAHNAUFNAHME- UND -ÜBERTRAGUNGSSYSTEM FÜR EIN BAHNVERARBEITUNGSSYSTEM
SYSTÈME DE PRISE ET DE TRANSFERT DE BANDE POUR SYSTÈME DE TRAITEMENT DE BANDE

(30) Priority: 19.05.2023 US 202363467614 P
(43) Date of publication of application: 06.08.2025
(73) Proprietor: Davis-Standard, LLC, Pawcatuck CT 06379 (US)
(72) Inventor: WILLIAMS, Samuel, New York 13036 (US); VANHORN, Shane, Syracuse, New York 13057 (US); JOHNSON, Carl, Gloucester, MA 01930 (US); LOMBARDI, Joseph, Manlius, NY 13104 (US)
(74) Representative: Bjerkén Hynell KB
(86) International application number: PCT/US2024/029944
(87) International publication number: WO 2024/243037

(56) References cited:
- CN-A- 109 043 651
- DE-A1- 10 343 452
- DE-A1- 102008 000 475
- US-A- 5 169 082
- US-A- 5 330 125
- US-A- 5 385 316
- US-B1- 6 282 867
- US-B1- 6 527 218
- US-B2- 7 980 504

## Description

### CROSS REFERENCE TO RELATED APPLICATIONS

The instant application is a PCT application of, and claims priority to, U.S. Provisional Application No. 63/467,614, filed on May 19, 2023.

### FIELD OF THE INVENTION

The present invention is directed to a web take-up and transfer system for a web processing system.

### BACKGROUND

Polymer film is manufactured by melting polymer pellets in an extruder apparatus and forcing melted polymer out of a gap (e.g., die slot, die lip) in the die that is in communication with the extruder apparatus. The molten polymer film is extruded from the die in the form of a web or tube. The web is cooled and processed on cooling drums to form a single layer web. The tube is processed in a blown film apparatus where it is discharged in a flattened form of a two-layer web. The webs are further processed through a configuration of rollers to impart desired physical properties in the web. The web is discharged from the configuration of rollers to a downstream winding system such as a turret winder where the web is wound onto cores. A prior art solution is disclosed in US 6 527 218 B1.

Issues can occur when running these systems, which can cause winding or another process to be interrupted and/or have web quality issues or another defect within the process. In some cases, the winding or another process would need to be interrupted to correct or clear these issues (e.g., web quality defects, loss of trim, bad roll change at spindle, etc.). These would either require a slowdown of the upstream process or a machine shut down. Operator intervention to correct these scenarios can potentially place them into an area that has hazards. Slowing or stopping the full machine line can also cost time and material dollars, especially during ramp up of the line back to normal operating conditions.

Thus, there is a need for an improved system that addresses the problems described above.

### SUMMARY

According to aspects illustrated herein, there is disclosed a roll transfer assembly for a web processing system includes a support beam that is moveably mounted (e.g., mounted for vertical or horizontal travel or combinations thereof) to a frame of the web processing system. The roll transfer assembly includes a segmented roll assembly rotatably mounted to the support beam. The segmented roll assembly includes a first end segment, a second end segment, a central segment positioned between the first end segment and the second end segment. The roll transfer assembly includes a first transfer roll positioned between the first end segment and the central segment and a second transfer roll positioned between the second segment and the central segment. The roll transfer assembly includes an actuation assembly connected to the support beam, the first transfer roll and the second transfer roll. The actuation assembly includes a first drive system configured to translationally move the first transfer roll and the second transfer roll relative to the support beam between a stored position and an extended position. A second drive system is connected to the frame and the support beam and is configured to translationally move the roll transfer assembly relative to the frame.

**In** some embodiments, the roll transfer assembly includes a belt assist conveyor assembly that is moveably connected to the frame between a retracted position and an engaging position.

**In** some embodiments, the belt assist conveyor assembly includes a first continuous conveyor belt mounted and driven around first pair of conveyor rollers; and a second continuous conveyor belt mounted and driven around second pair of conveyor rollers.

In some embodiments, the first transfer roll is moveably positioned opposite the first continuous conveyor belt and the second transfer roll is moveably positioned opposite the second continuous conveyor belt to urge a web strip to attach to a leader strip.

In some embodiments, the roll transfer assembly includes a transfer web slitter that is moveably mounted relative to the frame and includes a moveable cutting device that is configured to translationally slit the web strips.

There is disclosed herein a rotary accumulator system for a web processing system that includes a rail assembly mounted to a frame and a core roll that is rotatably mounted and translationally moveable along the rail between an operation position, a winding position and an unload position. The core roll is rotatable relative to the rail and is configured to wind a web thereon.

In some embodiments, the rotary accumulator system includes a knife slitter moveably mounted (e.g., translation linear movement) relative to the frame and is configured to cut the web and separate the web from a normal downstream process.

In some embodiments, the rotary accumulator system includes an adhesive application system that is configured to apply an adhesive to an exterior surface of the core roll.

In some embodiments, the rotary accumulator system includes a paster roll rotatably mounted to the frame and moveable (e.g., translational linear movement, e.g., substantially horizontal movement or angular movement)) towards and away from the core roll. The paster roll is moveable to contact the web and to urge the web, which is severed, against the core roll so that the severed web sticks to the core roll as a result of the adhesive.

In some embodiments, the rotary accumulator system includes a standby idler roll located below and laterally offset from the core roll. The standby idler roll is configured to guide the web between the transfer roll assembly and core roll to allow proper cut geometry between the web and the transfer slitter during the changeover step from the rotary accumulator to the winder spindles take-up process.

In some embodiments, the normal downstream process includes the web travelling to a dual turret winding system and the separation of the web from the normal downstream process includes preventing the web from travelling to the dual turret winding system.

In some embodiments, the rotary accumulator system includes a drive unit configured to rotate the core roll to cause the web to wind around the core roll.

There is disclosed herein a web processing system that includes: (a) a web winding system; (b) a roll transfer assembly located upstream of the web winding system, the roll transfer assembly includes: a support beam that is moveably mounted to a frame of the web processing system; a segmented roll assembly that is rotatably mounted to the support beam, the segmented roll assembly includes a first end segment, a second end segment, a central segment positioned between the first end segment and the second end segment, a first transfer roll positioned between the first end segment and the central segment, and a second transfer roll positioned between the second segment and the central segment; an actuation assembly connected to the support beam the first transfer roll and the second transfer roll, the actuation assembly includes a first drive system that is configured to translationally move the first transfer roll and the second transfer roll relative to the support beam between a stored position and an extended position; and a second drive system connected to the frame and the support beam and configured to translationally move the roll transfer assembly relative to the frame; and (c) a rotary accumulator system located upstream of the web winding system, the rotary accumulator system includes: a rail assembly mounted to a frame; and a core roll rotatably moveable along the rail between an operation position, a winding position and an unload position. The core roll is configured to wind a web.

In some embodiments, the web processing system includes a first slitter system located upstream of the web winding system and is configured to sever the web from the web winding system.

In some embodiments, the web processing system includes a paster roll that is moveably mounted to the frame and is movable towards and away from the core roll. The paster roll is configured to transfer the web to the core roll.

In some embodiments, the web processing system of includes a leader supply system located downstream of the first slitter system. The leader supply system includes one or more supplies of leader web stored therein. The roll transfer system is configured to sever the web from the core roll and transfer the web to the leader web. The leader web is threaded into the web winding system.

In some embodiments, the first end segment, the second end segment and/or the central segment includes nozzles configured to discharge a gas therefrom.

There is disclosed herein a method for transferring a web from and to a continuous processing stream to a take up system. The method includes the steps of: providing a web processing system for feeding a web to a winding system; providing a rotary accumulator system located upstream of the web processing system and having a core roll therein; providing a paster roll moveably mounted to the frame towards and away from the core roll; providing a first web slitter located upstream of the web processing system; providing a transfer roll assembly located upstream of the web processing system, the transfer roll assembly comprising a second web slitter; providing a belted assist conveyor assembly located upstream of the web processing system; providing a leader supply system located downstream of the first slitter system, the leader supply system including a supply of leader web stored therein and fed into the web processing system. The method further includes the steps of severing the web, via the first web slitter, from feeding into the web processing system; transferring, via the paster roll, the web to the rotary accumulator system; severing, via at least the second web slitter, the web from the core roll; and transferring, via the transfer roll assembly and the belted assist conveyor assembly, the web to leader web.

In some embodiments, the method includes a web that has a first layer and a second layer. The method also includes supplying, via the leader supply system, a first of the leader web and a second of the leader web. The method also includes transferring the first layer to the first leader web and transferring the second layer to the second leader web.

Any of the foregoing embodiments may be combined.

### BRIEF DESCRIPTION OF THE DRAWINGS

Referring now to the Figures, which are exemplary embodiments, and wherein the like elements are numbered alike:
FIG. 1 is a schematic top view of the structure of the turret winding system of the web transfer and take-up system according to an embodiment of the present disclosure;
FIG. 2 is another schematic top view of the structure of the turret winding system of the web transfer and take-up system;
FIG. 3 is a schematic side view of the structure of the web transfer and take-up system and a turret winding system;
FIG. 4A is a schematic side view showing the normal operating positions of the web and components of the web of the web transfer and take-up system;
FIG. 4B is an enlarged view of a portion of the web of detail 4B of FIG. 4A;
FIG. 5A is a schematic side view showing the cutover to rotary accumulator positions of the web and components of the web of the web transfer and take-up system;
FIG. 5B is a simplified schematic side view showing the cutover to rotary accumulator positions of the web and components of the web of the web transfer and take-up system;
FIG. 6 is a schematic side view showing the web and components of the web of the web transfer and take-up system shown preparing for re-threading the web back to the winder;
FIG. 7A is a schematic side view showing the beginning of the changeover from the rotary accumulator back to the winder positions of the web and components of the web of the web transfer and take-up system;
FIG. 7B is a simplified side view of portions of the web and components of the web of the web transfer and take-up system of FIG. 7A;
FIG. 7C is a simplified side view of portions of the web and components of the web of the web transfer and take-up system of FIG. 7A;
FIG. 8A is a schematic side view of the web and components of the web of the web transfer and take-up system shown with the transfer roll assembly in a transfer position;
FIG. 8B is a simplified schematic side view of the web and components of the web of the web transfer and take-up system of FIG. 8A shown with edge trim slitters in a position for cutting a leader width into the web;
FIG. 8C1 is a perspective view of the web and components of the web transfer and take-up system of FIG. 8B shown with full width guide rolls and with edge trim slitters in a position for cutting a leader width into the web;

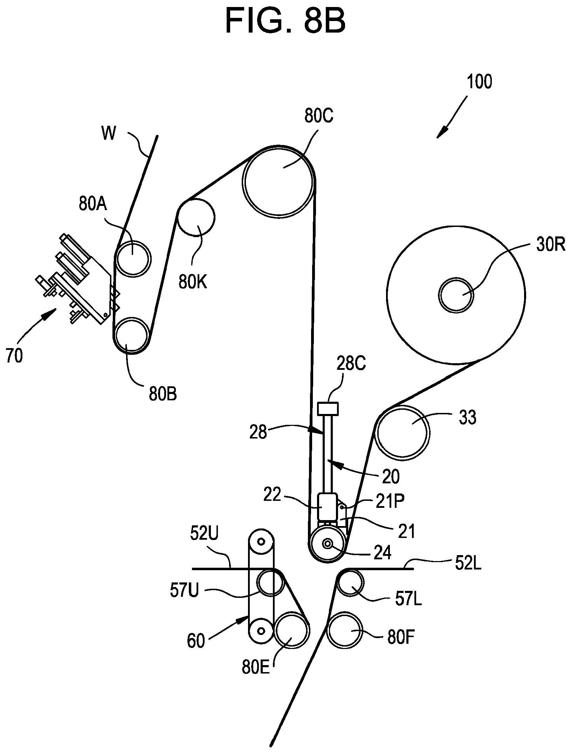

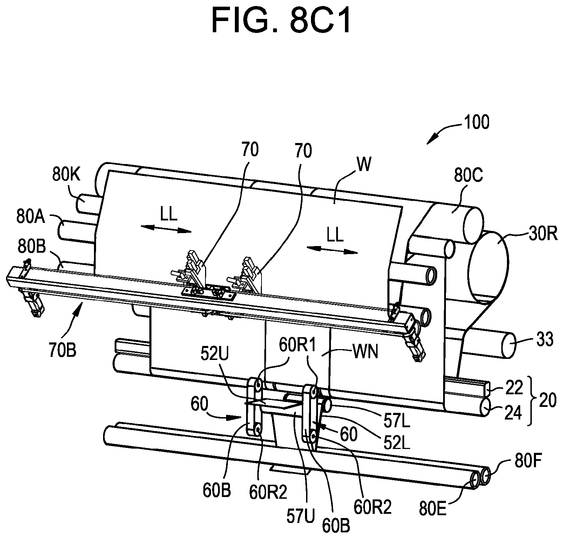

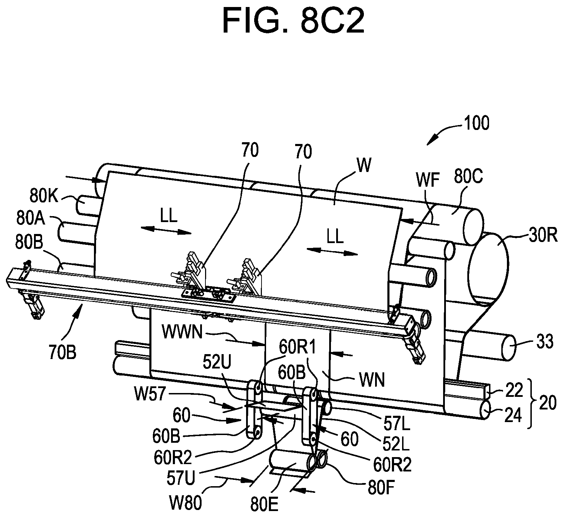

FIG. 8C2 is a perspective view of the web and components of the web transfer and take-up system of FIG. 8B shown with two reduced width guide rolls and with edge trim slitters in a position for cutting a leader width into the web;

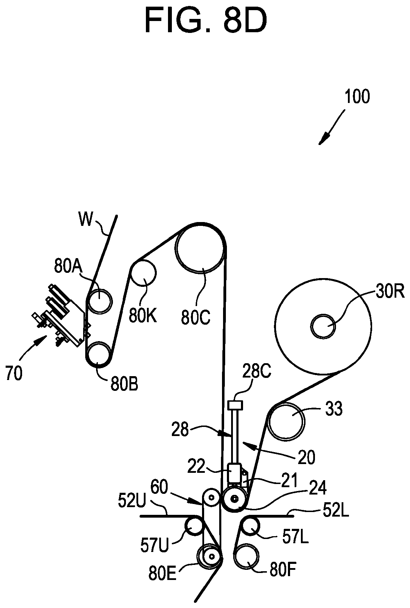

FIG. 8D is a simplified schematic side view of the web and components of the web of the web transfer and take-up system of FIG. 8B shown with traction rolls of the transfer roll assembly in position with the conveyor belt system with the leader web therebetween;

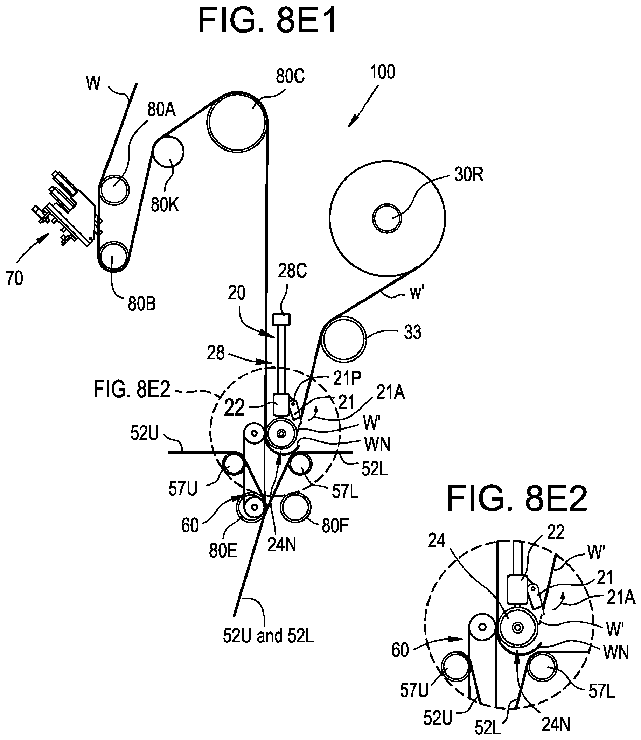

FIG. 8E1 is a simplified schematic side view of the web and components of the web of the web transfer and take-up system of FIG. 8B shown with the transfer knife assembly severing the center leader strip and the outer web sections still being wound on the rotary accumulator;
FIG. 8E2 is an enlarged view of detail 8E2 of FIG. 8E1;

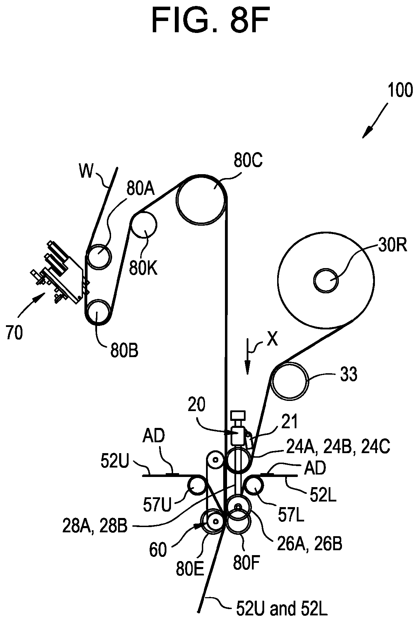

FIG. 8F is a simplified schematic side view of the web and components of the web of the web transfer and take-up system of FIG. 8E1 shown with the traction rollers moved downward;

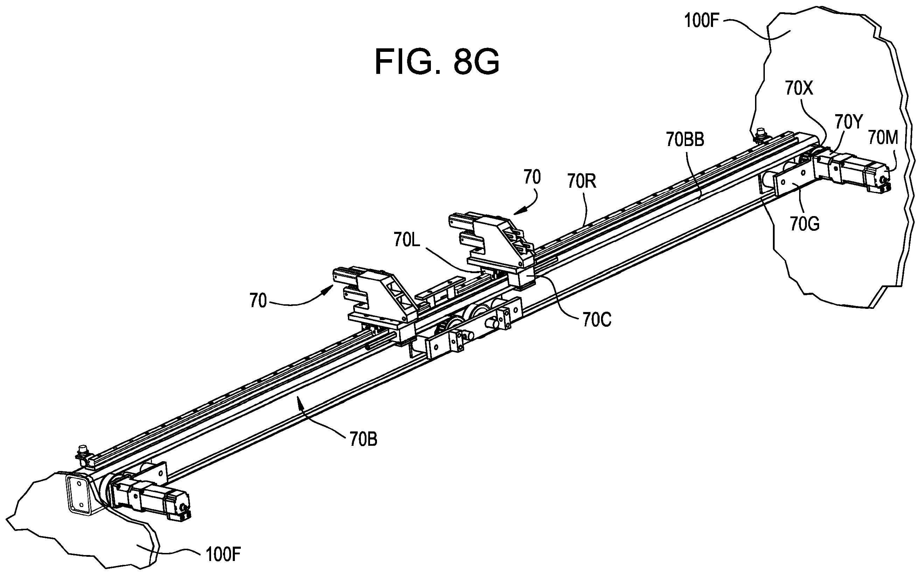

FIG. 8G is a perspective view of the slitter and rail assembly;

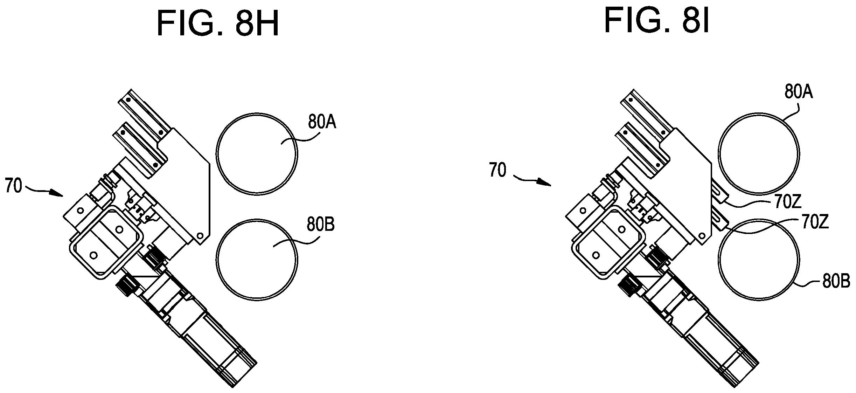

FIG. 8H is a side view of the slitter shown with the blade in a retracted position;
FIG. 8I is a side view of the slitter with the blade in an extended position;

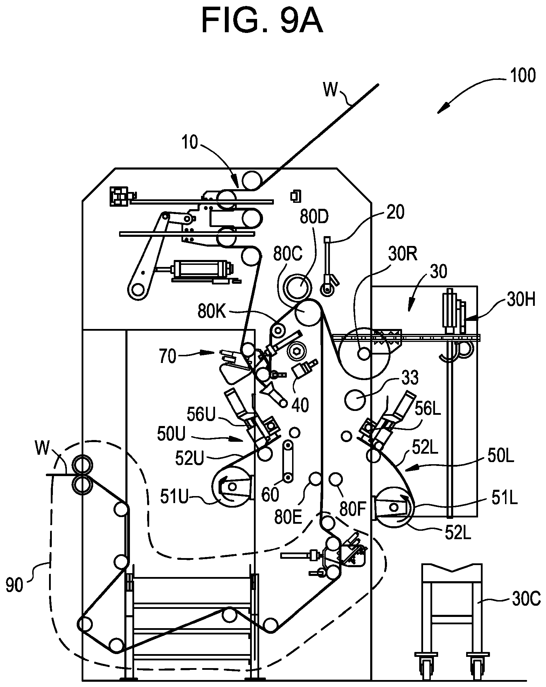

FIG. 9A is a schematic side view of the web and components of the web of the web transfer and take-up system showing the transfer roll assembly and belt conveyor system retracted;

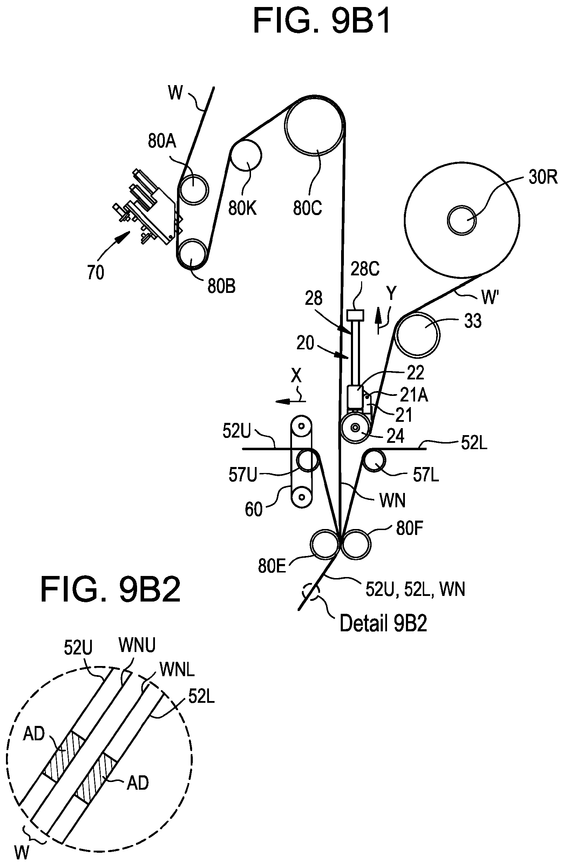

FIG. 9B1 is a simplified schematic side view of the web and components of the web of the web transfer and take-up system of FIG. 9A;

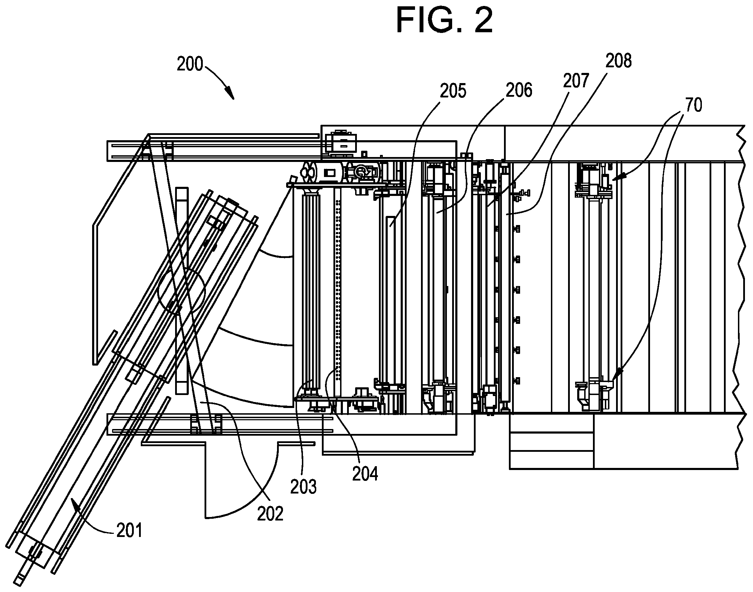

FIG. 9B2 is an enlarged view of detail FIG. 2B2 of FIG. 2B 1;

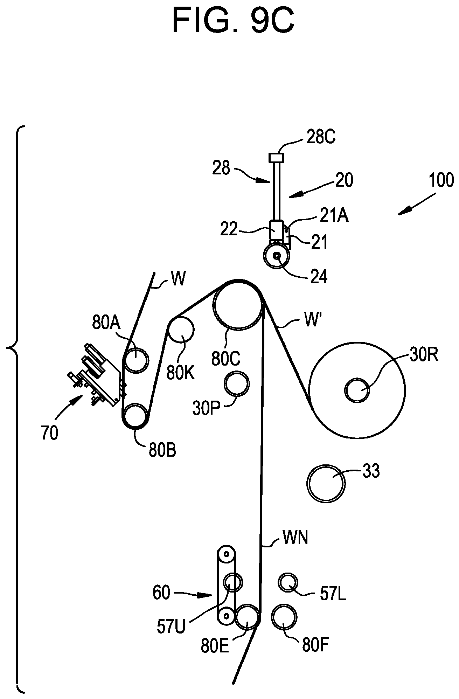

FIG. 9C is a simplified schematic side view of the web and components of the web of the web transfer and take-up system showing the transfer roll assembly in a stored position;

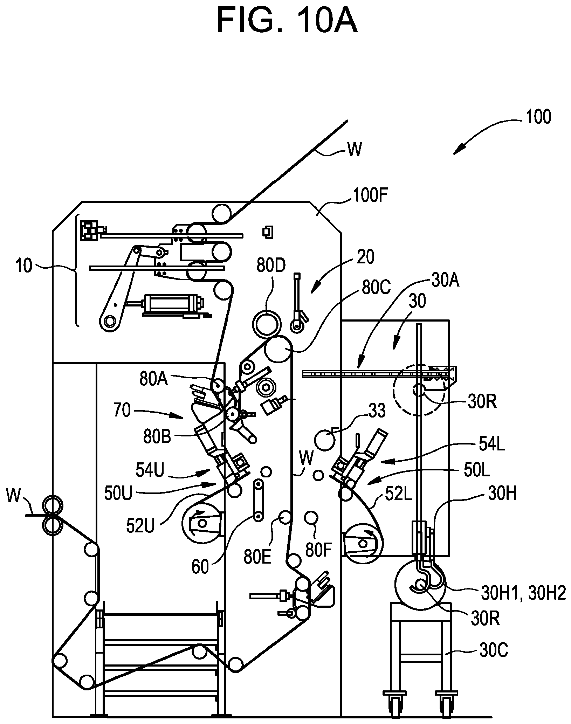

FIG. 10A is a schematic side view of the web and components of the web of the web transfer and take-up system showing the rotary accumulator in an unload position and the accumulator roll unloaded onto a cart;

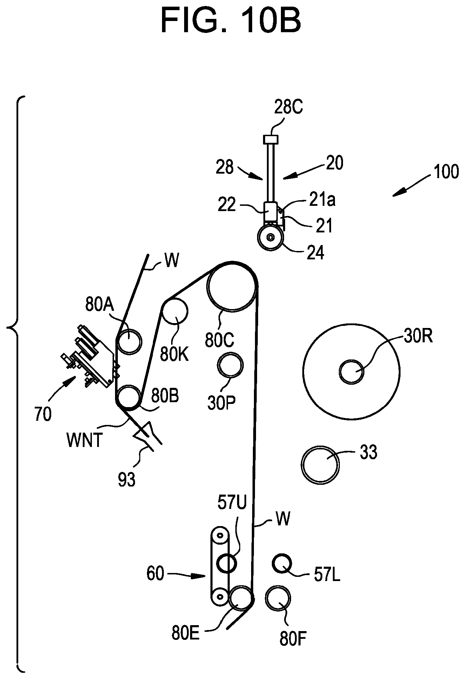

FIG. 10B is a simplified side view of a portion of the web and components of the web of the web transfer and take-up system of FIG. 10A;

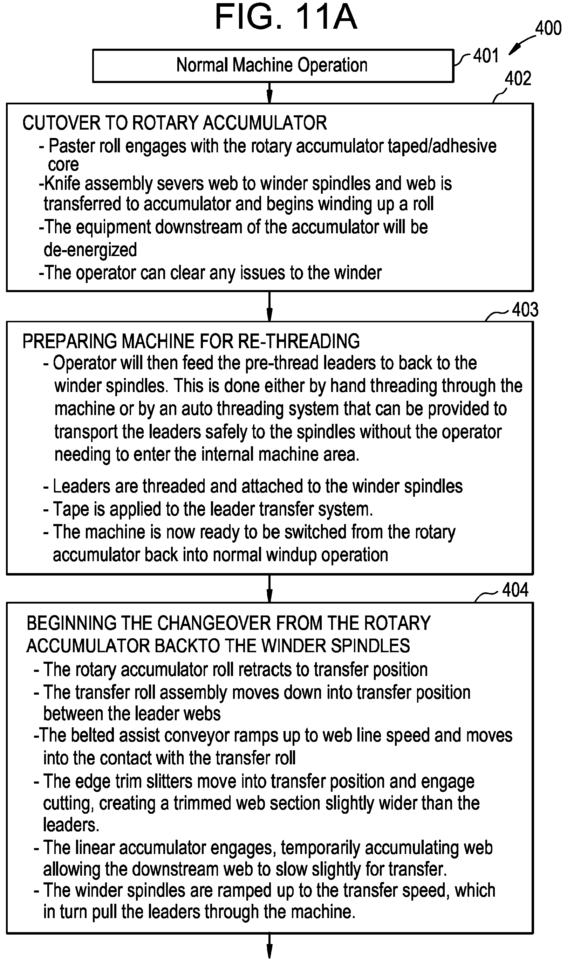

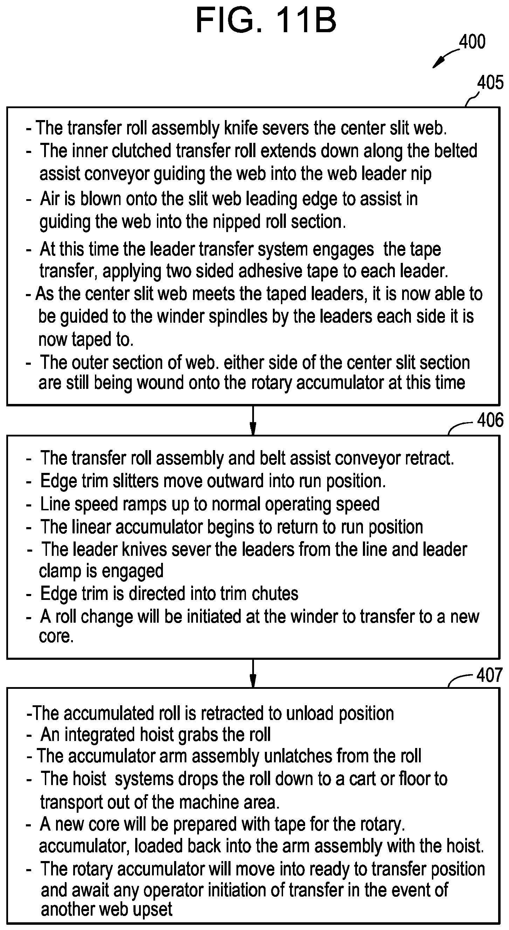

FIGS. 11A and 11B are a flow chart of a method of using the web transfer and take-up system;

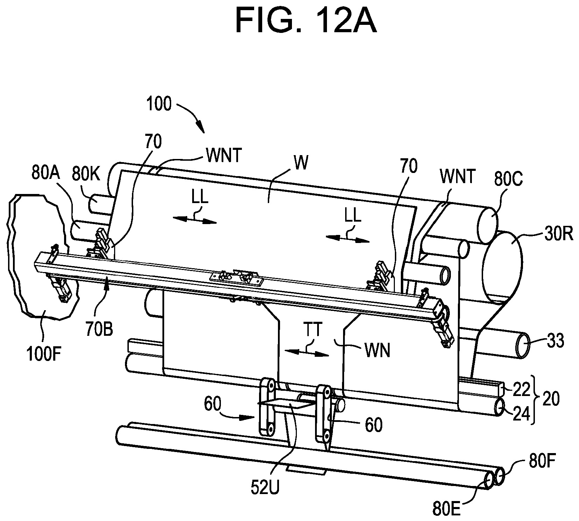

FIG. 12A is a front perspective schematic view of the web and components of the web of the web transfer and take-up system shown with the edge trim slitters in an outward trim position;

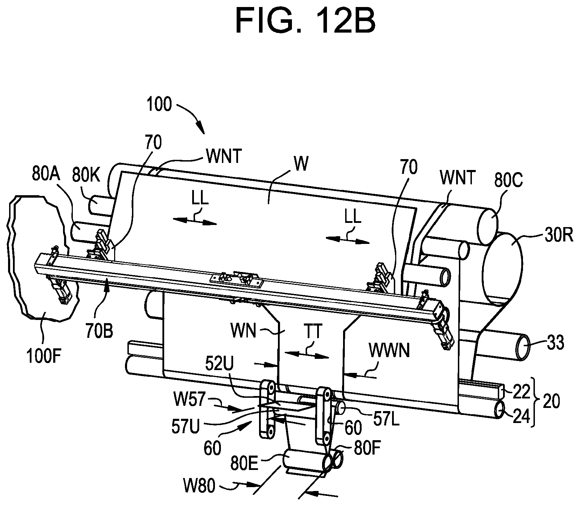

FIG. 12B is a front perspective schematic view of the web and components of the web of the web transfer and take-up system shown with two reduced width guide rollers and with the edge trim slitters in an outward trim position;

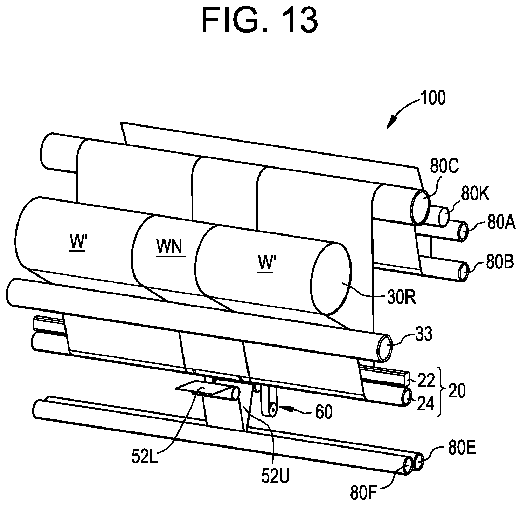

FIG. 13 is a back perspective schematic view of the web and components of the web of the web transfer and take-up system shown from the rotary accumulator side;

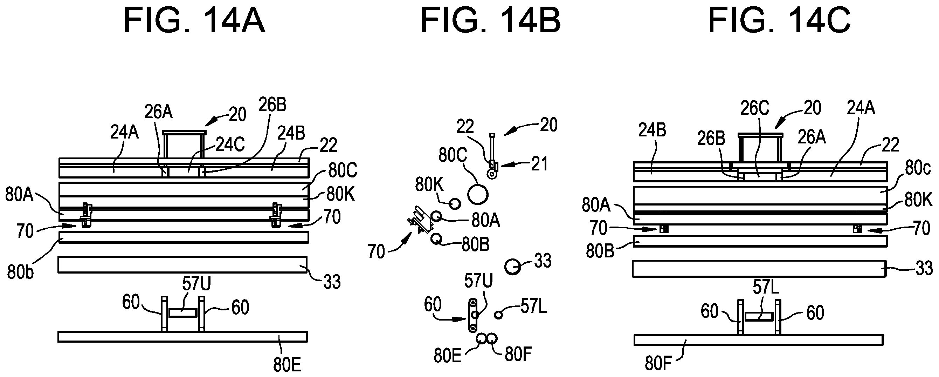

FIG. 14A is a front schematic view of a portion of the web transfer and take-up system of FIG. 14B;
FIG. 14B is a side view of a portion of the web transfer and take-up system with the transfer roll assembly shown in the stored position;
FIG. 14C is a rear schematic view of a portion of the web transfer and take-up system of FIG. 14B;

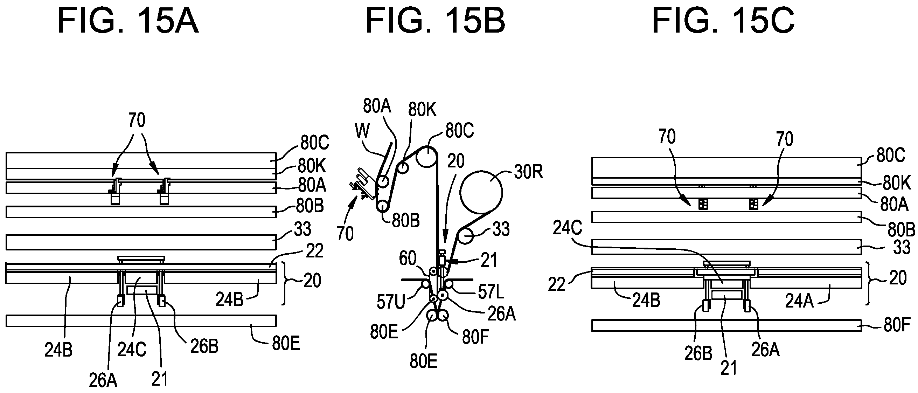

FIG. 15A is a front schematic view of a portion of the web transfer and take-up system of FIG. 15B;
FIG. 15B is a side view of a portion of the web transfer and take-up system with the transfer roll assembly shown in the extended position;
FIG. 15C is a rear schematic view of a portion of the web transfer and take-up system of FIG. 15B;

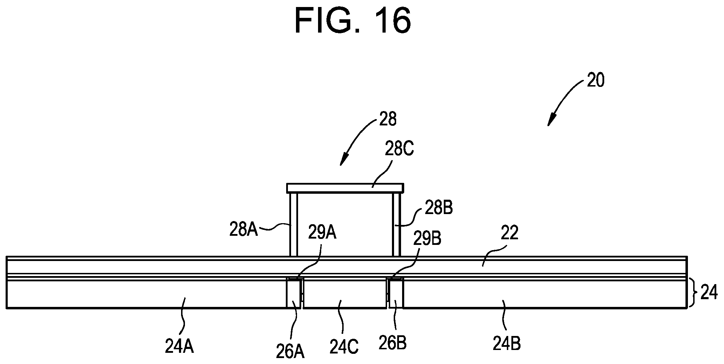

FIG. 16 is a front schematic view of the transfer roll assembly of FIG. 14B;

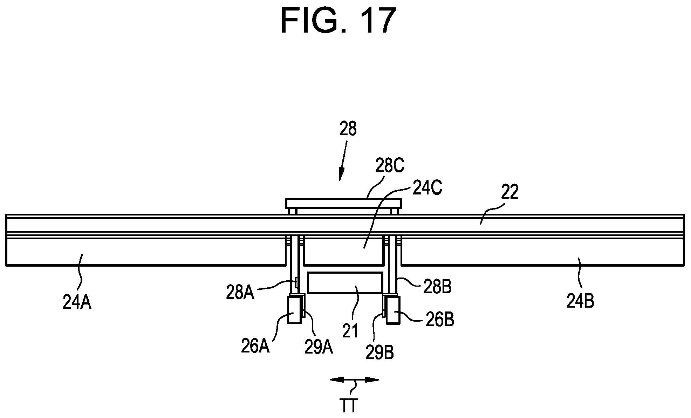

FIG. 17 is a front schematic view of the transfer roll assembly of FIG. 15B;

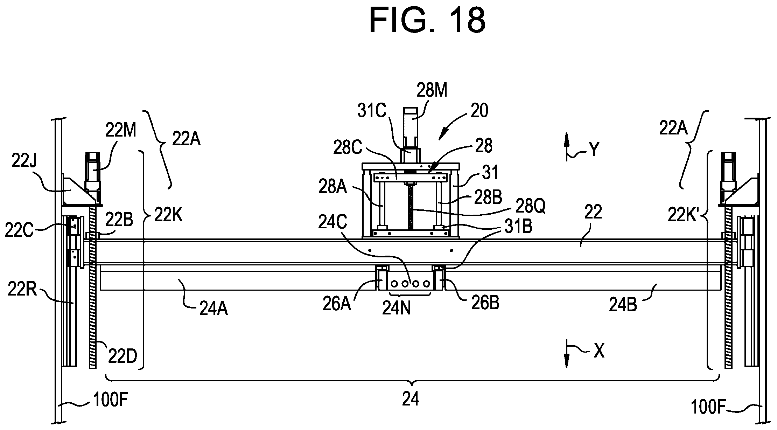

FIG. 18 is a front view of the roll transfer assembly with the support beam moveably mounted to a frame and shown with the support bean and transfer rolls in a stored or raised position;

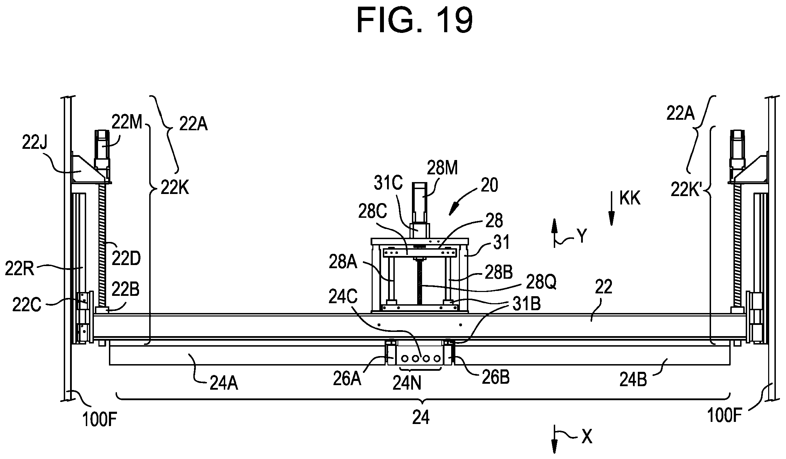

FIG. 19 is a front view of the roll transfer assembly with the support beam moveably mounted to a frame and shown with the support bean lowered position and transfer rolls in a stored or raised position;

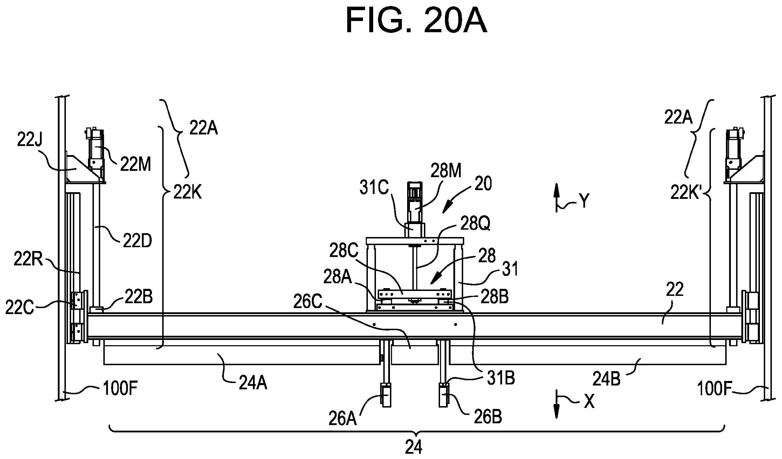

FIG. 20A is a front view of the roll transfer assembly with the support beam moveably mounted to a frame and shown with the support bean and transfer rolls in a transfer or lowered position;

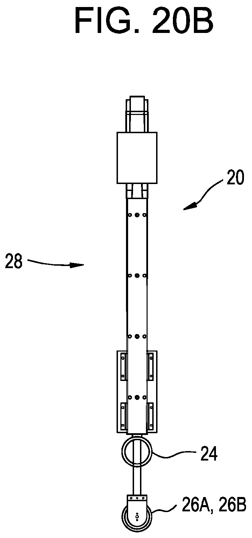

FIG. 20B is a side view of the roll transfer assembly of FIG. 20A;

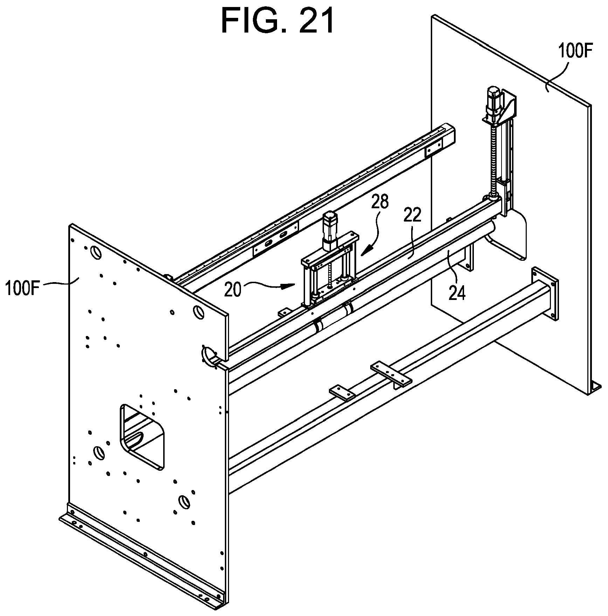

FIG. 21 is a perspective view of the roll transfer assembly of FIG. 18;

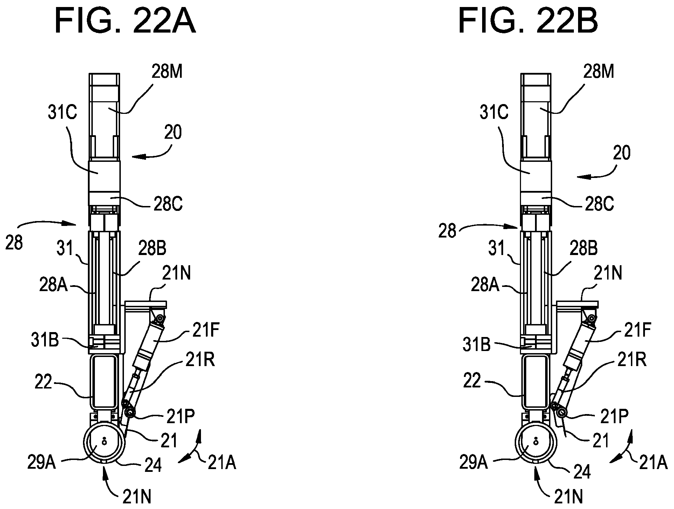

FIG. 22A is a side view of the roll transfer assembly shown with the transfer slitter shown in a retracted position;
FIG. 22B is a side view of the roll transfer assembly shown with the transfer slitter shown in an extended position;

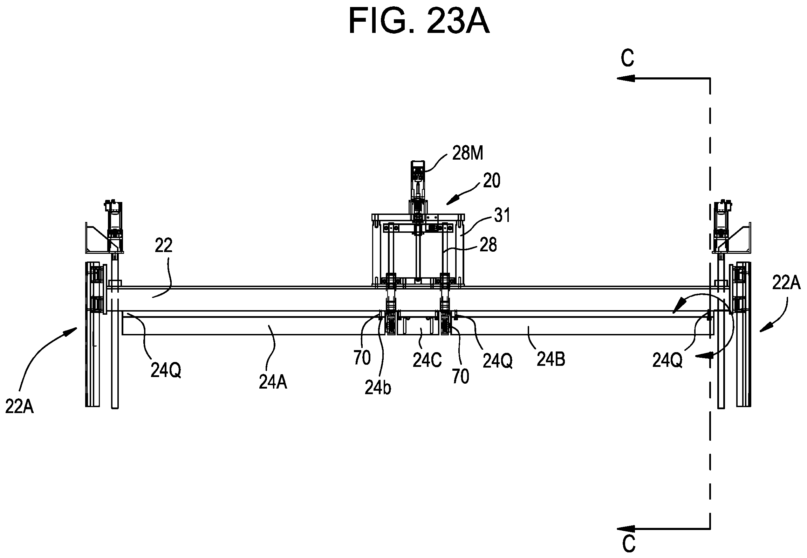

FIG. 23A is front view of the roll transfer assembly of the present invention;

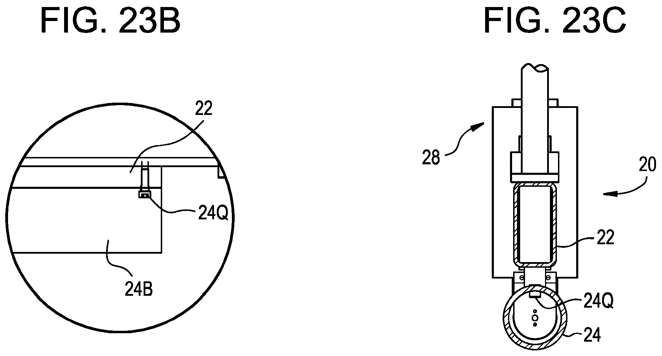

FIG. 23B is an enlarged view of detail 23B of FIG. 23A;
FIG. 23C is a cross sectional view of the roll transfer assembly of FIG. 23A, taken across section C-C;

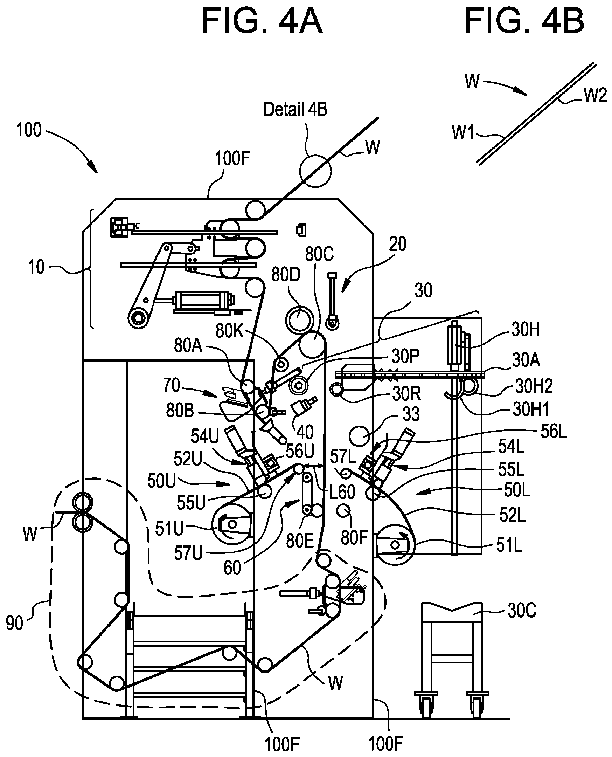

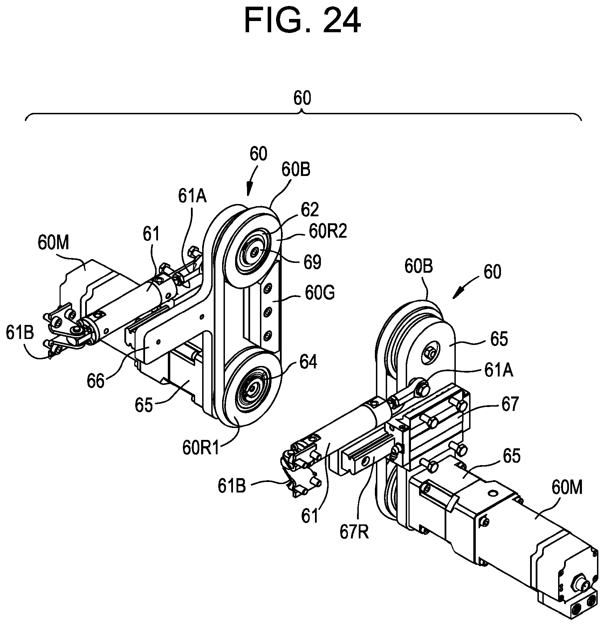

FIG. 24 is a perspective view of the belt assist conveyor assembly of FIGS 4A, 8C1 and 8C2;

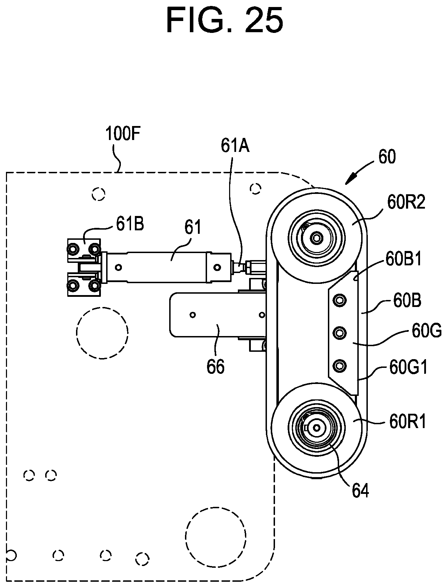

FIG. 25 is a side view of a portion of the belt assist conveyor assembly of FIG. 24; and

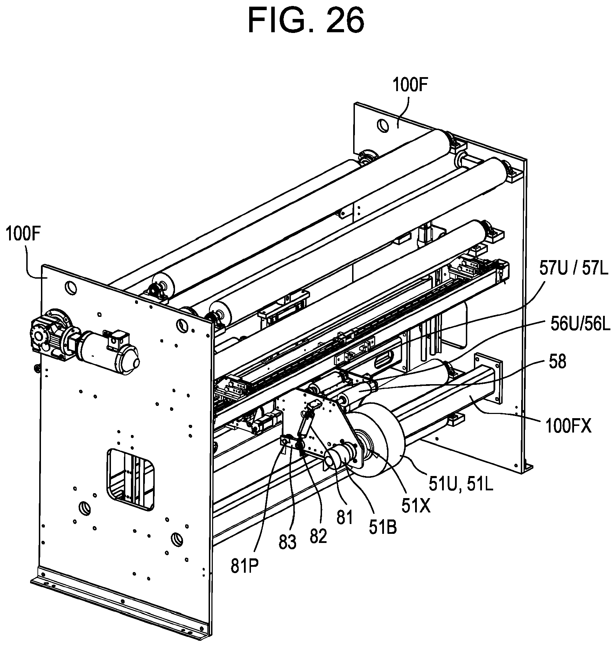

FIG. 26 is a perspective view of the web transfer and take-up system of FIG. 4A showing detail of the leader system.

### DETAILED DESCRIPTION

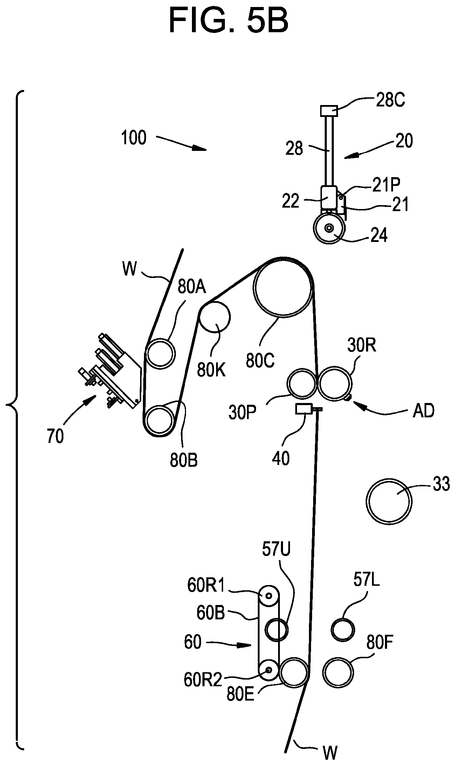

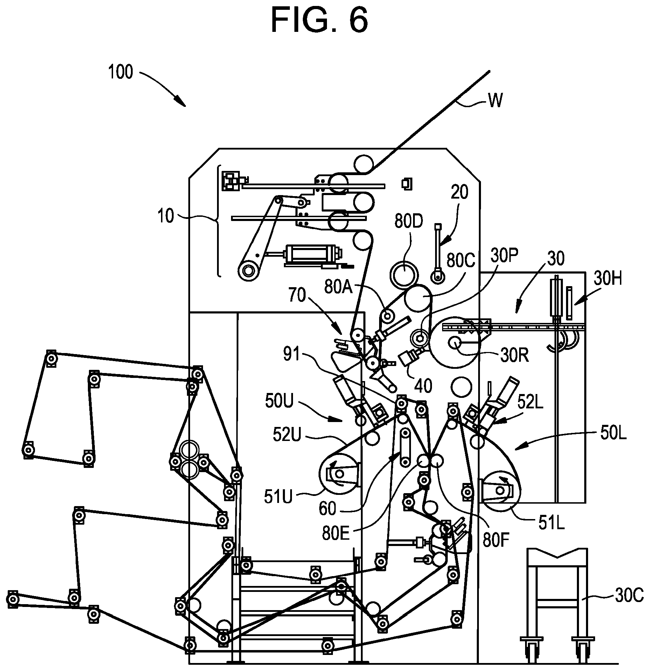

As shown in FIG. 4A, a web processing system (e.g., a web transfer and take-up system) according to an embodiment of the present disclosure is generally designated by the numeral 100. The web transfer and take-up system 100 includes a linear accumulator 10 positioned to receive a web W from an upstream portion (not shown) of the machine including the web processing system such as a blown film processing system in which a two-sheet web is produced or another type of system that produces a single sheet web. The web W shown in FIGS. 4A-10B, 12A, 12B and 13 is a two-sheet web as shown in detail in FIG. 4B. The web transfer and take-up system 100 is configured to process the two-sheet web W by including duplicate components as described herein. The web transfer and take-up system 100 includes a plurality of guide rollers 80A, 80B, 80C, 80D, 80E, 80F and 80K which guide the web W through the web transfer and take-up system 100. The guide rolls 80A, 80C, 80D, 80E, 80F and 80K are of uniform cylindrical shape. Guide roll 80K is a spreading roll that has a uniform sectional diameter across its full width but is formed in a curved or bowed shape used to direct the web towards opposite ends of this rolls simultaneously creating a spreading action. The amount and rotational direction of the curve can both be adjusted to increase or decrease the amount of spreading action across the guide roll 80K However, the present disclosure is not limited in this regard as other styles of spreader rolls can be employed that have a non-uniform shape, namely, a reverse crown shape with thicker (i.e., greater outside diameter) central portion which gradually tapers to a less thick (i.e., lesser outside diameters) towards the ends of the guide roll. The guide rolls 80C and 80D form a nip that pulls the web W therethrough with the assistance of the guide roll 80C which is a driven pull roll. The guide rolls 80E and 80F selectively form a leader nip that is operable during the web transfer process and pulls the web W therethrough with the assistance of the guide roll 80E which is a driven pull roll that is mounted on an axle that is fixed in place relative to the frame 100F and therefore does not have any linear movement. The guide rolls 80E and 80F are shown spaced apart from one another in FIG. 5B in a standby position. The guide rolls 80F is moveable (e.g., laterally translatable relative to the frame 100F) towards the guide roll 80E to form a nip (as shown in FIGS. 6, 7A, 8A, 8F, 9B1, 12A, 12B, 13) and away from one another as shown in FIG. 5B, for example. The guide rolls 80E and 80F are in close vertical proximity to a belt assist conveyor assembly 60, as described further herein. As shown in FIGS. 8C1, 8C2, 8G, 8H, 8I, 12A and 12B, the web transfer and take-up system 100 includes two edge trim slitters 70 that are mounted in close proximity to the web W and are positioned between the idler rolls 80A and 80B. The edge trim slitters 70 are moveably mounted to a linear rail 70R that is secured to a beam 70B that is secured to the frame 100F. The edge trim slitters 70 include a linear bearing 70L that rides along the linear rail 70R. The edge slitters 70 each include a belt clamp 70C that engages a drive belt 70BB. The drive belt 70BB wraps around a drive sprocket 70X that is attached to a gearbox 70Y. A motor 70M is in driving engagement with the gearbox 70Y and is secured to the beam 70B via a mounting bracket 70G. The edge slitters 70 each include a retractable and extendable cutting knife 70Z as shown in FIG. 8I in which the cutting knife 70Z is shown in an extended position. FIG. 8H shows the edge slitter 70 with the cutting knife hidden and in a retracted position. The edge slitters 70 are laterally translatable across the web W from the edges (see FIGS. 12A and 12B) thereof to central locations for forming by cutting narrow web strips WN, as shown in FIGS. 8C 1 and 8C2 and annotated by the arrows LL.

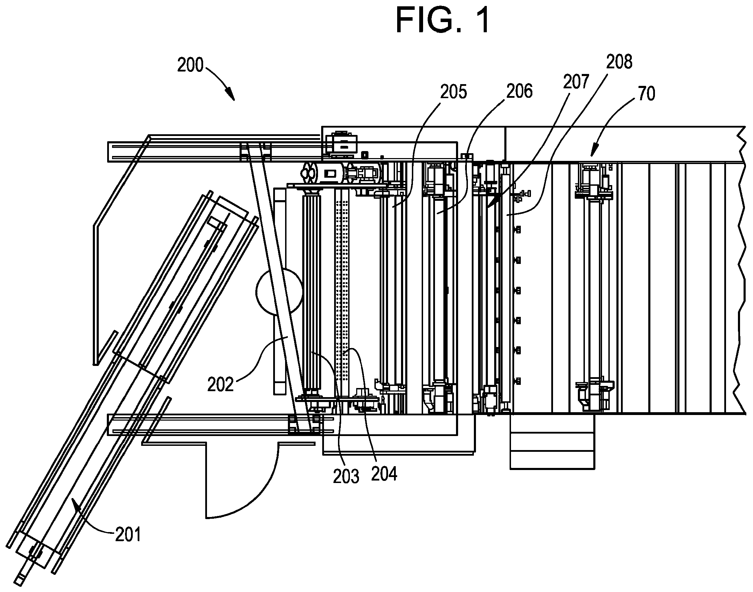

The web transfer and take-up system 100 includes a transfer section 90 that includes another plurality of rollers that cooperate to transfer the web W to a downstream winding system, such as the dual turret winding system 200 shown in FIGS 1-3. The dual turret winding system 200 includes a finished product roll cart 201, a finished roll overhead gantry 202, winder core shafts 203, winder web guide bars 204, a winder-roll changer carriage 205, a winder-roll changer lead in rolls 206, a static neutralization bar 207, a winder lead in roll including separator nip 208 and edge trim slitters 70.

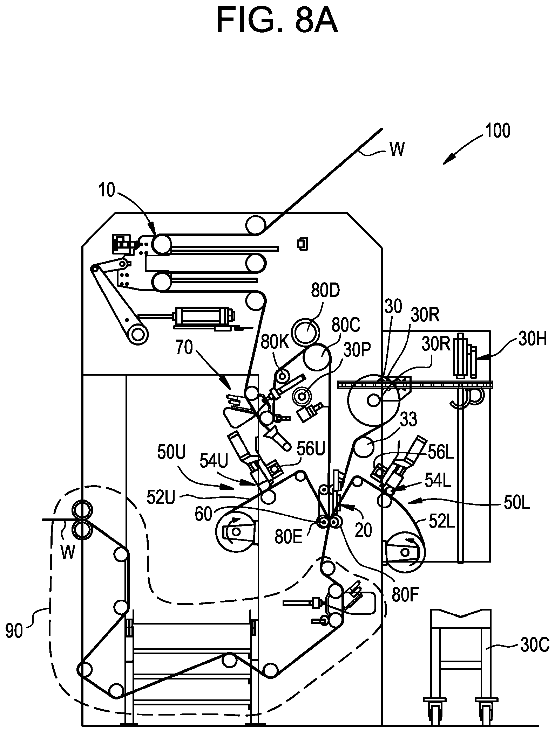

Referring again to FIG. 4A, the web transfer and take-up system 100 includes a roll transfer assembly 20 that is mounted in movable relation (e.g., translational motion, vertical motion, sloped motion) relative to a frame 100F (e.g., a stationary frame) in which the web transfer and take-up system 100 is mounted. As described further herein, the roll transfer assembly 20 is moveable from a stored position (e.g., FIG. 4A) to a transfer position (e.g., FIGS. 8A, 8B, 8D, 8E and 8F) in which portions of the roll transfer assembly 20 deploy to assist in the transfer of the web W to a leader during rethreading of the web through the web transfer and take-up system 100. As described further herein, the roll transfer assembly 20 cooperates with the belt assist conveyor assembly 60 to urge a pair of narrow web strips WN (see FIGS. 8C1 and 8C2) of the two layer web W to attach to (e.g., adhere to) an upper leader strip 52U and a lower leader strip 52L.

The web transfer and take-up system 100 includes an upper leader supply system 50U and a lower leader supply system 50L. The upper leader system 50U includes an upper leader supply spindle roll 51U rotatably mounted to the frame 100F and which has a supply of the upper leader strip 52U (e.g., polymer web of film) rolled thereon; and the lower leader system 50L includes a lower leader supply spindle roll 51L rotatably mounted to the frame 100F and which has a supply of the lower leader strip 52L (e.g., polymer web of film) rolled thereon. While the web transfer and take-up system 100 is shown and described as including an "upper" leader supply system 50U and a "lower" leader supply system 50L, the present invention is not limited in this regard as other relative positions of the leader supply systems 50U and 50L may be employed including but not limited to a left leader supply system and a right leader supply system of the two leader supply systems may be positioned substantially along the same horizontal line.

The upper leader system 50U includes an upper adhesive application system 54U positioned downstream of the upper leader spindle roll 51U. The upper adhesive application system 54U is configured to apply an adhesive such as double-sided tape to the upper leader strip 52U. An idler roll 55U is positioned opposite the upper adhesive application system 54U to prevent the upper leader strip 52U from deflecting during the application of the adhesive. An upper leader slitter 56U is positioned downstream of the upper adhesive application system 54U and is configured to transversely cut the upper leader strip 52U thereby separating it from the upper leader spindle roll 51U. Another idler roll 57U is positioned downstream of the upper leader slitter 56U and is configured to guide the upper leader strip 52U over the idler roll 57U and towards the leader nip formed by the idler rolls 80E and 80F.

The lower leader system 50L includes a lower adhesive application system 54L positioned downstream of the lower leader spindle roll 51L. The lower adhesive application system 54L is configured to apply an adhesive such as double-sided tape to the lower leader strip 52L. An idler roll 55L is positioned opposite the lower adhesive application system 54L to prevent the lower leader strip 52L from deflecting during the application of the adhesive. A lower leader slitter 56L is positioned downstream of the lower adhesive application system 54L and is configured to transversely cut the lower leader strip 52L thereby separating it from the lower leader spindle roll 51L. Another idler roll 57L is positioned downstream of the lower leader slitter 56L and is configured to guide the lower leader strip 52L over the idler roll 57L and towards the leader nip formed by the idler rolls 80E and 80F.

As shown in FIG. 12B the idler rolls 57U and 57L and the upper and lower leader strips 52U and 52L each have a width W57. The idler rolls 80E and 80F each have a width W80 that is about equal to the width W57. While the idler rolls 80E and 80F are shown and described as each having a width W80 that is about equal to the width W57, the present invention is not limited in this regard as the idler rolls 80E and 80F may have greater widths, about equal to that of the entire a segmented roll 24, as shown in FIG. 12A. As shown in FIG. 8C2, the narrow web strips WN have a width WWN that is less than the total width WF of the web W and slightly greater than the width W57 of the idler rolls 57U and 57L and the upper and lower leader strips 52U and 52L. The first continuous conveyor belt 60B and the second continuous conveyor belt 60B are laterally spaced apart from one another by a width W60 that is slightly greater than the width W57 of the idler rolls 57U and 57L and the upper and lower leader strips 52U and 52L and slightly greater than the width W80 of each of the idler rolls 80E and 80F. Having the width WNN of the narrow web strips slightly greater than the width W57 permits the first continuous conveyor belt 60B and the second continuous conveyor belt 60B to grab the narrow web strips WN and the upper and lower leader strips 52U and 52L are able to pass between the first continuous conveyor belt 60B and the second continuous conveyor belt 60B and the guide rollers 80E and 80F.

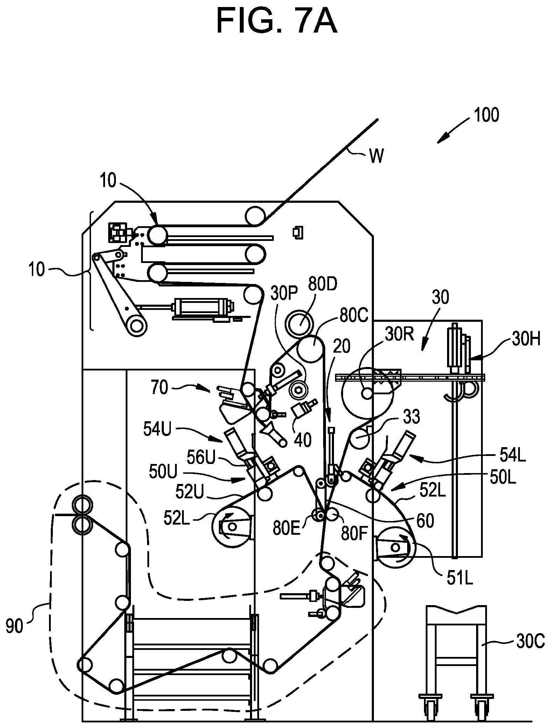

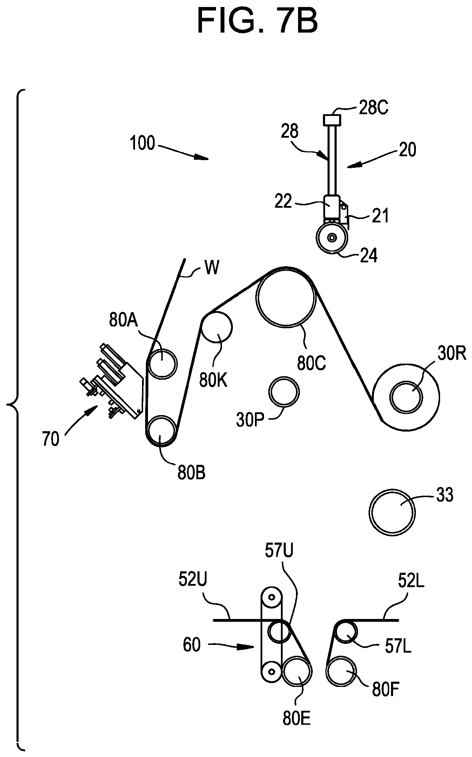

As shown in FIG. 26, each of the upper and lower leader systems 50U, 50L, respectively, include a post 100FX secured to the frame 100F and an expandable core shaft 51X attached to the post 100FX. The upper leader spindle roll 51U and the lower leader spindle roll 51L are secured to a respective one of the expandable core shafts 51X. A brake or motor system 51B is in communication with a respective one of the expandable core shafts 51X to create tension in the upper and lower leader strips 52U and 52L. The upper and lower leader strips 52U and 52L are wrapped around, stored on and dispensed from the respective one of the upper leader spindle roll 51U and the lower leader spindle roll 51L. The upper leader slitter and the lower leader slitter 56U and 56L are located between the respective idler roll 57U, 57L and a guide roll 58. A mounting frame 100F1 is secured to the frame 100F and supports the idler rolls 57U, 57L and a guide roll 58. A cylinder 81 is mounted to the mounting frame 100F1 and has a rod end 82 moveably extending therefrom. The rod end 82 is pivotally attached to a link arm 83 that has an opposite end attached to a pivot pin 81P which is engaged with the guide roll 80F. The cylinder 81, the rod end 82, the link arm 83 and the pivot pin 81P cooperate to move the guide roll 80F towards and away from guide roll 80E.As shown in FIG. 4A, the web transfer and take-up system 100 includes a rotary accumulator assembly 30 that is located downstream of the guide rolls 80C and 80D. The rotary accumulator assembly 30 includes a rail assembly 30A (e.g., two parallel tracks) mounted to the frame 100F or to a structure adjacent thereto. A core roll 30R is rotatably mounted on an axel (not shown) which is moveably secured to the rail 30A, for example, at opposing ends of the axel. The axel is moveably (e.g., slideably, linear actuator moveably or rack and pinion guided moveably) mounted to the rail assembly to facilitate linear movement (e.g., horizontal travel) of the axel and core roll 30R from an operating position, (see FIG. 4A), to a winding or building position (see FIG. 6), to a transfer position (see FIG. 7A) and to an unload position (see FIG. 10A). An adhesive AD (see FIG. 5B) is applied to the exterior surface of the core roll 30R before the severed web W is wound thereon. The rotary accumulator assembly 30 includes a knife slitter 40 that is moveable relative to the frame and is configured to cut the web W and separate the web W from the normal downstream process (i.e., disconnect the web W from travelling to the dual turret winding system 200).

The rotary accumulator assembly 30 includes a paster roll 30P which is rotatably mounted to the frame 100F and is moveable towards and away (e.g., horizontal track guided movement) from the core roll 30R. The paster roll 30P contacts the web W and is configured to urge the severed web W against the core roll 30R so that the severed web W sticks to the core roll 30R as a result of the adhesive AD (see FIG. 5B) thereon. The paster roll 30P continues to urge the severed web W against the core roll 30R so that the web W is uniformly wound onto the core roll 30R. When the core roll 30R is full, the paster roll 30P retracts away from the core roll 30R.

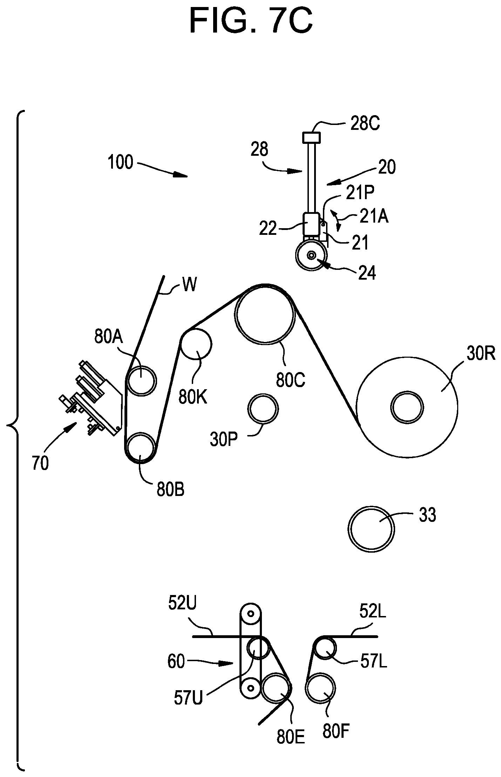

The core roll 30R is in communication with a drive unit (not shown) which rotates the core roll 30R to facilitate winding of the web thereon after the web W is severed from the normal path of travel and during the final stages of the transfer process. The rotary accumulator system 30 includes a loader/unloader assembly 30H (e.g., an integrated hoist) that has a pair of lift features 30H1 and 30H2 (e.g., hooks, chain falls, cables and the like) adapted thereto. The lift features 30H1 and 30H2 are configured to receive opposing ends of the axel, lift the axel and loaded core roll 30R off of the rail assembly 30A and lower the loaded core roll 30R to a cart 30C. The lift features 30H1 and 30H2 are configured to receive opposing ends of the axel, lift the axel and new empty core roll 30R and position it on to the rail assembly 30A. As shown in FIG. 7C the rotary accumulator system 30 includes a standby idler roll 33 located below the core roll 30R and above the idler roll 57L. As shown in FIGS. 8C1 and 8C2, the standby idler roll 33 guides the web W between the transfer roll assembly 20 and core roll 30R to allow proper cut geometry between the web W and the transfer slitter 21 during the changeover step from the rotary accumulator to the winder spindles take-up process.

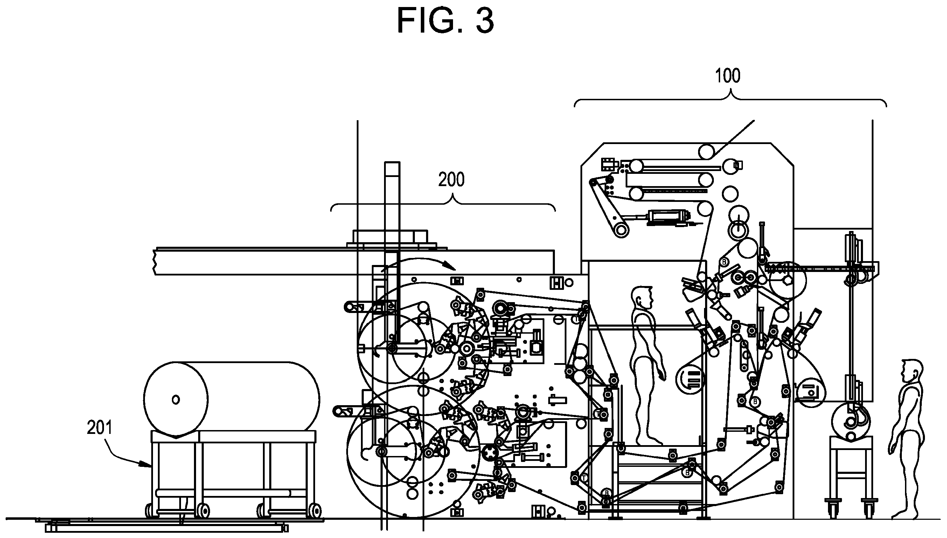

As shown in FIGS. 5B, 8C1, 8C2, 12A and 12B, the belt assist conveyor assembly 60 includes a first continuous conveyor belt 60B mounted and driven around a pair of first conveyor rollers 60R1 and 60R2 and a second continuous conveyor belt 60B mounted and driven around a pair of second conveyor rollers 60R1 and 60R2. The first transfer roll 26A is positionable opposite and adjacent to the first continuous conveyor belt 60B, and the second transfer roll 26B is positionable opposite and adjacent to the second continuous conveyor belt 60B to urge a web strip WN to attach to a leader strip. The belt assist conveyor 60 is moveably mounted to the frame 100F (see FIG. 3 and 4) for movement (e.g., linear movement) towards (see FIGS. 8D, 8E and 8F) the roll transfer assembly 20 when the roll transfer assembly 20 is in the transfer position; and away (see FIGS. 9A, 9B 1 and 9C) from the roll transfer assembly 20 before and after the transfer of each of the pair of the narrow web strips WN (see FIGS. 8C1 and 8C2) to the upper leader strip 52U and the lower leader strip 52L. For clarity, the pair of narrow web strips WN are designated WNU and WNL in FIG. 9B2. As shown in FIG. 9B2, the upper leader strip 52U is adhered to the narrow web strips WNU by an adhesive AD; and the lower leader strip 52L is adhered to the narrow web strip WNL by an adhesive AD.

As shown in FIG. 24, the belt assist conveyor assembly 60 includes two spaced apart mechanisms each also designated by the numeral 60. Each of the mechanisms of the belt assist conveyor assembly 60 include a linear rail 67R mounted to a plate frame 66 and a linear bearing 67 that is in sliding engagement with the linear rail 67R and is mounted to the frame 100F. Each of the mechanisms of the belt assist conveyor assembly 60 include a gearbox 65 mounted to the plate frame 66 and a motor 60M connected to the gearbox 65. The gear box 65 is connected to the first conveyor roller 60R1 via a shaft and a one way (i.e., clutched) radial bearing 64. Thus, the first conveyor roller 60R1 is driven by the motor 60M and the gearbox 65 in one rotational direction. Each of the mechanisms of the belt assist conveyor assembly 60 include the second conveyor roller 60R2 that is an idler roller and is rotationally mounted to the plate frame 66 via a shaft 69 and is supported by a radial bearing 62. The continuous conveyor belt 60B is seated in and wrapped around an outer circumferential portion of the first conveyor roller 60R1 and the second conveyor roller 60R2 and is driven by the first conveyor roller 60R1.

As shown in FIGS. 24 and 25, each of the mechanisms of the belt assist conveyor assembly 60 include a cylinder 61 that has an actuation rod 61A moveably extending therefrom. A distal end of the actuation rod 61A is secured to the plate frame 66. The cylinder 61 is mounted to the frame 100F via a bracket 61B. The actuation rod 61A is extendable and retractable from the cylinder 61 in response to fluid (e.g., hydraulic, pneumatic) pressure applied to and released from the cylinder 61 to move the plate frame 66 and the components (e.g., the first conveyor roller 60R1, the second conveyor roller 60R2 and the continuous belt 60B) attached thereto towards and away from the web W in the direction L60 as shown on FIG. 4A.

As best shown in FIG. 25, each of the mechanisms of the belt assist conveyor assembly 60 include a guide plate 60G that is secured to the plate frame 66. The guide plate 60G has a guide surface 60G1 that is in sliding engagement with an underside 60B1 of the continuous conveyor belt 60B. The guide plate 60G ensures the continuous conveyor belt 60B remains tight (i.e., prevents sagging) against the rollers 26A and 26B which hold onto the web WN.

Referring to FIG. 16, the roll transfer assembly 20 includes a support beam 22 moveably mounted to the frame 100F by a support beam actuator system 22A and a segmented roll 24 rotatably mounted thereto. The segmented roll assembly 24 includes a first end segment 24A and a second end segment 24B with a central segment 24C positioned axially between the first end segment 24A and the second end segment 24B. A first transfer roll 26A is positioned between the first end segment 24A and the central segment 24C; and a second transfer roll 26B is positioned between the second segment 24B and the central segment 24C. As shown in FIGS. 23A, 23B and 23C, the first end segment 24A, the second end segment 24B and the central segment 24C a fixedly secured to the support beam 22 via fasteners such as bolts 24Q. The web W rides over stationary the first end segment 24A, the second end segment 24B and the central segment 24C. In some embodiments, the first end segment 24A, the second end segment 24B and/or the central segment 24C include nozzles formed therein for the discharge of a gas such as air therefrom to reduce friction between the web W and the first end segment 24A, the second end segment 24B and the central segment 24C and to help float or glide the web W over the first end segment 24A, the second end segment 24B and the central segment 24C. In some embodiments, the first end segment 24A, the second end segment 24B and the central segment 24C are rotatably mounted to the support beam 22. In some embodiments, as shown in FFIG. 8E1 and 8E2 and 18 nozzles 24N (e.g., holes or apertures) are formed in or attached to the central segment 24C. The nozzles 24N communicate with an interior area of the central segment 24C in which an air supply is provided and connected to the nozzles 24N (e.g., via a manifold). The nozzles 24N discharge a gas, such as air, out of the nozzles and urge the narrow web strips WN (see FIG. 8E1 and 8E2) down along the belt assist conveyor assembly 60 guiding the narrow web strips WN into the web leader nip between guide rolls 80E and 80F. In a stored positioned (raised position as shown in FIG. 16) and in a traveling position (i.e., in positions between the stored position shown in FIG. 16 and the transfer position or lowered position shown in FIG. 17) the first end segment 24A, the second end segment 24B, the central segment 24C, the first transfer roll 26A and the second transfer roll 26B are coaxial with one another. The first end segment 24A and the second end segment 24B are about equal in length. The length of the first end segment 24A and the length of the second end segment 24B are each greater than a length of the central segment 24C. The first transfer roll 26A and the second transfer roll 26B are each of a lesser length than the central segment 24C. The roll transfer assembly 20 includes an actuation assembly 28 that is moveably mounted to the support beam 22. As shown in FIGS 18, 19 and 20A, the roll transfer assembly 20 is secured to the support beam 22 via a standoff support 31. A motor 28M is secured to a top portion of the standoff support 3 1 via a coupling 31C. The actuation assembly 28 includes a first actuation rod 28A (e.g., a linear rail) and a second actuation rod 28B (e.g., a linear rail) coupled to one another by a cross member 28C. The first transfer roll 26A is rotationally coupled to the first actuation rod 28A by a first bracket 29A (see FIG. 17); and the second transfer roll 26B is rotationally coupled to the second actuation rod 28B by a second bracket 29B (see FIG. 17). The actuation assembly 28 includes a first drive system 28A that translationally moves the first transfer roll 26A and the second transfer roll 26B relative to the beam 22 (e.g., downwardly and away from the beam 22). The first drive system 28A includes a lead screw 28Q coupled to the motor 28M and to the cross member 28C. The motor 28M rotates the lead screw 28Q which causes the cross member 28C, the first actuation rod 28A and the second actuation rod 28B to move upwardly in the direction of the arrow Y and downwardly in the direction of the arrow X. The first actuation rod 28A and the second actuation rod 28B slide in respective pairs of linear bearings 31B which are secured to the standoff support 31 and to an under portion of the support beam 22.

As shown in FIGS. 18, 19 and 20A, the roll transfer assembly 20 includes a second drive system 22A that is configured to translationally move (e.g., upwardly in the direction of the arrow Y, downwardly in the direction of the arrow X, horizontally and angular movement) the roll transfer assembly 20 relative to the frame 100F (see FIG. 4A for the frame 100F). The second drive system 22A includes a first actuator system 22K arranged on first end of the support beam 22 and a second actuator system 22K' arranged on a second end of the support beam 22. The first actuator system 22K includes a motor 22M secured to the frame 100F via a mounting bracket 22J. A lead screw nut 22B is secured to the support beam 22 proximate the first end of the support beam 22. A lead screw 22D is connected to the motor which is configured to rotate the lead screw 22D in the lead screw nut 22B to cause the support beam 22 to move downwardly in the direction of the arrow X and upwardly in the direction of the arrow Y. A linear rail 22R is secured to the frame 100F. A linear bearing system 22C is secured to the first end of the support beam 22. The linear bearing system 22C is arranged to slide on the linear rail 22R in response to movement of the support beam 22. The second actuator system 22K' is configured identical to the first actuator system 22K. In some embodiments, the first actuator system 22K and the second actuator system 22K' are operated synchronically.

As shown in FIGS. 7C and 17 the roll transfer assembly 20 includes a transfer web slitter 21 pivotally secured to the support beam 22 and mounted for translational slitting (i.e., separating or severing in an axial direction transverse a direction of the travel of the web W, as shown by the arrow TT in FIGS. 12A, 12B and 17) of the narrow web strips WN. As best shown in FIGS. 22A and 22B, the transfer web slitter 21 mounted to the roll transfer assembly 20 is pivotal about a pivot pin 21P in an arcuate path as indicated by the arrow 21A. An actuation cylinder 21F is mounted to the support beam 22 via a mounting bracket 21N. The actuation cylinder 21F has a rod end 21R moveably extending from the actuation cylinder 21F. The rod end 21R is linked to the pivot pin 21P such that movement of the rod end 21R rotates the pivot pin 21P and the transfer web slitter 21 in the direction of the arrow 21A. The transfer web slitter 21 is shown in FIGS. 7C and 22A in a stored position in proximity to the beam 22. The transfer web slitter 21 is shown in FIGS. 8E and 22B in an extended position pivoted away from the beam 22 in the direction of the arrow 21 A to separate the narrow web strips WN from the core roll 30R.

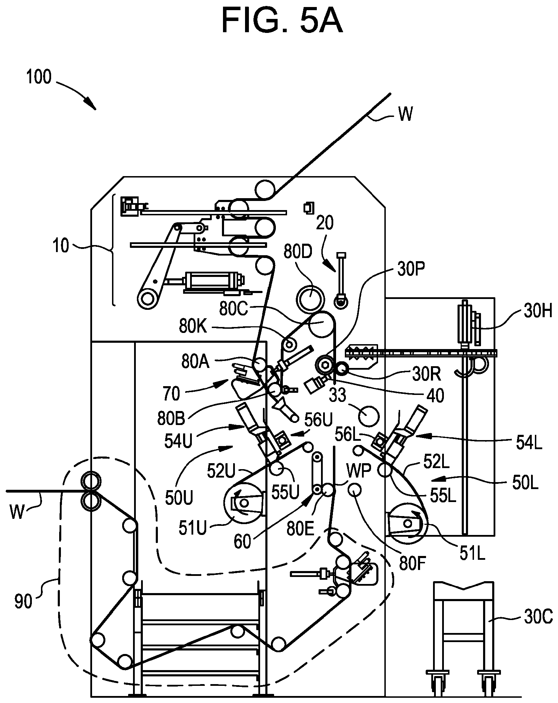

As shown in FIGS. 11A and 11B, a method 400 is provided for taking up web W and a transfer system for a web processing system 100. The method includes providing the web processing system 100 that is initially in normal operation 401 with the web W. The method 400 includes a cutover step 402 from the path to the turret winding system 200 to the rotary accumulator assembly 30. The cutover step 402 includes having the paster roll 30P engage with the core roll 30R with adhesive thereon (see FIG. 5A); the knife slitter 40 severing the web W from the path to the turret winding system 200 (see FIG. 5A) and the web W being transferred to the rotary accumulator assembly 30 and winding up a roll of the web W on the core roll 30R beginning; and the turret winding system 200 and other equipment downstream of the rotary accumulator assembly 30 being de-energized so that the operator can clear any issues in the turret winding assembly 200 and the path thereto.

The method 400 further includes a preparing the machine that includes the web processing system 100 for re-threading step 403 in which the operator will feed pre-thread leader strips WP (along with the leader strips 52U and 52L) (see FIG. 5A) back to the turret winding assembly 200. This is done either by hand threading through the machine or by an auto threading system that can be provided to transport and attach the pre-thread leader strips WP safely to the spindles on the turret winding system 200 without the operator needing to enter the internal machine area. Tail ends of the pre-thread leader strips WP are positioned between guide rolls 80E and 80F with the aid of a transfer assist device 91 (see FIG. 6). An adhesive such as a tape is applied by the upper adhesive application system 54U and lower adhesive application system 54L to the upper leader strip 52U and the lower leader strip 52L, respectively. The machine is now ready to be switched back into normal windup operation.

The method 400 further includes a beginning the changeover step 404 from the rotary accumulator assembly 30 back to the spindles on the turret winding system 200. The beginning of the changeover step 404 includes having the core roll 30R retract to a transfer position; having the roll transfer assembly 20 move down in the direction indicated by the arrow X (see FIGS. 8E and 8F) into transfer position between the upper leader strip 52U and the lower leader strip 52L (see FIG. 7A); the belted assist conveyor assembly 60 ramping up to web line speed and moving into the contact with the first transfer roll 26A (i.e., a clutched roll that can rotate only in one direction) and the second transfer roll 26B (i.e., a clutched roll that can rotate only in one direction); the edge trim slitters 70 moving into transfer position and engage cutting, creating narrow web strips WN slightly wider than the upper leader strip 52U and the lower leader strip 52L (see FIGS. 8C1 and 8C2); the linear accumulator 10 engaging, temporary accumulating web to allow the downstream web to slow slightly for transfer; and the spindles on the turret winding system 200 ramping up to transfer speed, which in turn pulls the pre-thread leaders WP, the upper leader strip 52U and the lower leader strip 52L through the machine.

The method 400 further includes a transfer roll assembly severing step 405 in which the transfer web slitter 21 severs the narrow web strips WN (see FIG. 8E1); the first transfer roll 26A and second transfer roll 26B extend down along the belt assist conveyor assembly 60 guiding the narrow web strips WN into the web leader nip between guide rolls 80E and 80F; the leader transfer system engages the tape transfer, and the upper adhesive application system 54U and lower adhesive application system 54L apply an adhesive, such as a sided tape, to the upper leader strip 52U and the lower leader strip 52L. As the narrow web strips WN meets the taped upper leader strip 52U and the lower leader strip 52L, it is now able to be guided to the winder spindles by the pre-thread leader strips WP (each side it is now taped to). The outer sections of web W' (see FIGS. 8C1, 8C2 and 13) on outboard sides of the narrow web strips WN are still being wound onto the core roll 30R at this time as shown in FIG. 8E1.

The method 400 further includes a retract step 406 in which the roll transfer assembly 20 retracts upwardly in the direction indicated by the arrow Y in FIG. 9B1 and the belt assist conveyor assembly 60 retracts horizontally in the direction indicated by the arrow X in FIG. 9B 1, the edge trim slitters 70 move outward into run position and cut narrow edge trim strips WNT (see FIGS. 12A and 12B) still wind onto the core roll 30R, line speed ramps up to normal operating speed, the linear accumulator 10 begins to return to the run position, the upper leader slitter and the lower leader slitter 56U and 56L sever the upper leader strip 52U and the lower leader strip 52L from the line and a leader clamp is engaged to halt feeding of the upper leader strip 52U and the lower leader strip 52L from the upper leader spindle roll 51U and the lower leader spindle roll 52L, edge trim WNT is directed into trim chutes 93 (see FIG. 10B), and a roll change is initiated at the turret winding system 200 to transfer to a new core. With the edge trim strips WNT now directed into the trim chutes 93, web W' is no longer going to the core roll 30R and the roll rotation can be stopped.

The method 400 further includes an unload step 407 in which core roll 30R with the web W accumulated thereon is retracted to an unload position, as shown dashed lines in FIG. 10A. The loader/unloader assembly 30H (e.g., integrated hoist) grabs the core roll 30R with the web W rolled thereon, the accumulator arm assembly (i.e., the rail assembly 30A) unlatches from the core roll 30R, loader/unloader assembly 30H drops the core roll 30R down to the cart 30C or the floor for transport out of the machine area (see FIG. 10A), new core roll 30A is prepared with tape for the rotary accumulator assembly 30 and loaded back into the rail assembly 30A with the loader/unloader assembly 30H, and the core roll 30R moves into ready-to-transfer position. An operator may initiate transfer in the event of another web upset.

## Claims

1. A roll transfer assembly (20) for a web processing system (100), the roll transfer assembly (20) comprising:
a support beam (22) moveably mounted to a frame (100F) of the web processing system (100);
a segmented roll assembly (24) rotatably mounted to the support beam (22), the segmented roll assembly (24) comprising a first end segment (24A), a second end segment (24B), a central segment (24C) positioned between the first end segment (24A) and the second end segment (24B), a first transfer roll (26A) positioned between the first end segment (24A) and the central segment (24C), and a second transfer roll (26B) positioned between the second segment (24B) and the central segment (26C); the roll transfer assembly being **characterized by** further comprising
an actuation assembly (28) connected to the support beam (22), the first transfer roll (26A) and the second transfer roll (26B), the actuation assembly (28) comprising a first drive system configured to translationally move the first transfer roll (26A) and the second transfer roll (26B) relative to the support beam (22) between a stored position and an extended position; and
a second drive system connected to the frame (100F) and the support beam (22) and configured to translationally move the roll transfer assembly (20) relative to the frame (100F).

2. The roll transfer assembly (20) of claim 1, further comprising a belt assist conveyor assembly (60) moveably connected to the frame (100F) between a retracted position and an engaging position.

3. The roll transfer assembly (20) of claim 2, wherein the belt assist conveyor assembly (60) comprises a first continuous conveyor belt (60B) mounted and driven around first conveyor rollers (60R1,60R2), and a second continuous conveyor belt (60B) mounted and driven around second conveyor rollers (60R1,60R2).

4. The roll transfer assembly (20) of claim 3, wherein the first transfer roll (26A) is positionable opposite the first continuous conveyor belt (60B), and the second transfer roll (26B) is positionable opposite the second continuous conveyor belt (60B) to urge a web strip (WN) to attach to a leader strip.

5. The roll transfer assembly (20) of claim 4, further comprising a transfer web slitter (70) configured to form the web strips (WN) in a continuous web (W).

## Patentansprüche

1. Rollentransferanordnung (20) für ein Bahn-Verarbeitungssystem (100), wobei die Rollentransferanordnung (20) umfasst:
einen an einem Rahmen (100F) des Bahn-Verarbeitungssystems (100) bewegbar angebrachten Tragebalken (22);
eine an dem Tragebalken (22) drehbar angebrachte segmentierte Rollenanordnung (24), wobei die segmentierte Rollenanordnung (24) ein erstes Endsegment (24A), ein zweites Endsegment (24B), ein zwischen dem ersten Endsegment (24A) und dem zweiten Endsegment (24B) positioniertes Zentralsegment (24C), eine zwischen dem ersten Endsegment (24A) und dem Zentralsegment (24C) positionierte erste Transferrolle (26A) und eine zwischen dem zweiten Endsegment (24B) und dem Zentralsegment (26C) positionierte zweite Transferrolle (26B) umfasst, wobei die Rollentransferanordnung **dadurch gekennzeichnet ist, dass** diese ferner umfasst:
eine mit dem Tragebalken (22), der ersten Transferrolle (26A) und der zweiten Transferrolle (26B) verbundene Betätigungsanordnung (28), wobei die Betätigungsanordnung (28) ein erstes Antriebssystem umfasst, konfiguriert zum translatorischen Bewegen der ersten Transferrolle (26A) und der zweiten Transferrolle (26B) bezüglich des Tragebalkens (22) zwischen einer Speicherposition und einer ausgefahrenen Position; und
ein mit dem Rahmen (100F) und dem Tragebalken (22) verbundenes und zum translatorischen Bewegen der Rollentransferanordnung (20) bezüglich des Rahmens (100F) konfiguriertes zweites Antriebssystem.

2. Rollentransferanordnung (20) nach Anspruch 1, ferner umfassend eine mit dem Rahmen (100F) zwischen einer zurückgezogenen Position und einer Eingriffsposition bewegbar verbundene Bandunterstützungsförderanordnung (60).

3. Rollentransferanordnung (20) nach Anspruch 2, wobei die Bandunterstützungsförderanordnung (60) ein um erste Förderrollen (60R1, 60R2) angebrachtes und angetriebenes erstes Endlos-Förderband (60B) und ein um zweite Förderrollen (60R1, 60R2) angebrachtes und angetriebenes zweites Endlos-Förderband (60B) umfasst.

4. Rollentransferanordnung (20) nach Anspruch 3, wobei die erste Transferrolle (26A) gegenüber dem ersten Endlos-Förderband (60B) positionierbar ist und die zweite Transferrolle (26B) gegenüber dem zweiten Endlos-Förderband (60B) positionierbar ist, um einen Bahnstreifen (WN) zur Anbringung an einem Führungsstreifen zu drängen.

5. Rollentransferanordnung (20) nach Anspruch 4, ferner umfassend einen Transferbahnschlitzer (70), konfiguriert zum Bilden der Bahnstreifen (WN) in einer kontinuierlichen Bahn (W).

## Revendications

1. Ensemble de transfert à rouleaux (20) pour un système de traitement de toile (100), l'ensemble de transfert à rouleaux (20) comprenant :
une poutre de support (22) montée de manière mobile sur un châssis (100F) du système de traitement de toile (100) ;
un ensemble rouleau segmenté (24) monté de manière rotative sur la poutre de support (22), l'ensemble rouleau segmenté (24) comprenant un premier segment d'extrémité (24A), un deuxième segment d'extrémité (24B), un segment central (24C) positionné entre le premier segment d'extrémité (24A) et le deuxième segment d'extrémité (24B), un premier rouleau de transfert (26A) positionné entre le premier segment d'extrémité (24A) et le segment central (24C), et un deuxième rouleau de transfert (26B) positionné entre le deuxième segment (24B) et le segment central (26C); l'ensemble de transfert à rouleaux étant **caractérisé en ce qu'**il comprend en outre
un ensemble d'actionnement (28) relié à la poutre de support (22), au premier rouleau de transfert (26A) et au deuxième rouleau de transfert (26B), l'ensemble d'actionnement (28) comprenant un premier système d'entraînement configuré pour déplacer en translation le premier rouleau de transfert (26A) et le deuxième rouleau de transfert (26B) par rapport à la poutre de support (22) entre une position rangée et une position étendue ; et
un deuxième système d'entraînement relié au châssis (100F) et à la poutre de support (22) et configuré pour déplacer en translation l'ensemble de transfert à rouleaux (20) par rapport au châssis (100F) .

2. Ensemble de transfert à rouleaux (20) selon la revendication 1, comprenant en outre un ensemble de convoyeur assisté par courroie (60) relié de manière mobile au châssis (100F) entre une position rétractée et une position de mise en prise.

3. Ensemble de transfert à rouleaux (20) selon la revendication 2, dans lequel l'ensemble de convoyeur assisté par courroie (60) comprend une première courroie de convoyeur continue (60B) montée et entraînée autour de premiers rouleaux de convoyeur (60R1, 60R2), et une deuxième courroie de convoyeur continue (60B) montée et entraînée autour de deuxièmes rouleaux de convoyeur (60R1, 60R2).

4. Ensemble de transfert à rouleaux (20) selon la revendication 3, dans lequel le premier rouleau de transfert (26A) peut être positionné à l'opposé de la première courroie de convoyeur continue (60B), et le deuxième rouleau de transfert (26B) peut être positionné à l'opposé de la deuxième courroie de convoyeur continue (60B) pour amener une bande de toile (WN) à se fixer à une bande amorce.

5. Ensemble de transfert à rouleaux (20) selon la revendication 4, comprenant en outre un dispositif de refendage de toile à transfert (70) configuré pour former les bandes de toile (WN) dans une toile continue (W).
